**Europäisches Patentamt**

**European Patent Office**

**Office européen des brevets**

(19)

(11) **EP 0 784 213 A2**

## (12) EUROPÄISCHE PATENTANMELDUNG

(43) Veröffentlichungstag:
16.07.1997 Patentblatt 1997/29

(51) Int. Cl.$^6$: **G01S 13/93**, G01S 13/72

(21) Anmeldenummer: 97100182.1

(22) Anmeldetag: 08.01.1997

(84) Benannte Vertragsstaaten:
**DE FR GB**

(30) Priorität: **13.01.1996 DE 19601121**

(71) Anmelder: **Daimler-Benz Aerospace Aktiengesellschaft**
**81663 München (DE)**

(72) Erfinder:
- **Kleinhempel, Werner, Dr.**
  **89231 Neu-Ulm (DE)**
- **Stammler, Walter, Dr.**
  **89077 Ulm (DE)**

(74) Vertreter: **Fröhling, Werner, Dr.**
**Daimler-Benz Aerospace AG,**
**Wörthstrasse 85**
**89077 Ulm (DE)**

(54) **Verfahren zur Bestimmung des Abstandes und/oder der Differenzgeschwindigkeit zwischen einem Radarsensor und einem oder mehreren Objekten sowie Anordnung zum Durchführen des Verfahrens**

(57)    Die Erfindung betrifft ein Abstandsradar, das nach dem Dopplerradarprinzip arbeitet und bei dem die detektierten Abstands(R)- und Geschwindigkeits(v)-Werte als R,v-Matrix abgelegt werden und durch Vergleich mit Referenzmusteroperatoren der Abstand bzw. die Relativgeschwindigkeit der sich in einem vorgegebenen Umkreis des Abstandradars befindlichen Objekte ermittelt werden. In einem Tracker werden aus der Gruppe der detektierten Objekte relevante Objekte ausgewählt und anhand deren Abstands- und Relativgeschwindigkeitswerten deren Spur verfolgt.

Um die Abstands- und Geschwindigkeitswerte der als relevant erkannten Objekte in ihrer Genauigkeit zu verbessern, wird nach der Erfindung vorgeschlagen, daß als Referenzmusteroperatoren ein- oder zweidimensionale Filter- oder Differenzmusteroperatoren verwendet werden, die auf die einzelnen Werte der R,v-Matrix angewandt werden, und daß nach der Grobbestimmung der Werte für Abstand und Relativgeschwindigkeit diese Werte einer genaueren Analyse unterzogen werden bei.

FIG. 1

**Beschreibung**

Die Erfindung betrifft ein Verfahren zur Bestimmung des Abstandes und/oder der Differenzgeschwindigkeit zwischen einem Radarsensor 1 und einem oder mehreren Objekten gemäß Oberbegriff des Patentanspruchs 1 sowie eine Anordnung zum Durchführen des Verfahrens gemäß Oberbegriff des Patentanspruchs 14.

Verfahren bzw. Anordnungen dieser Art werden allgemein in der Verkehrstechnik eingesetzt; als Objekte kommen dabei alle Arten von Fahrzeugen, wie Kraftfahrzeuge, Schiffe, Flugzeuge, Hubschrauber, unbemannte Flugkörper usw. in Frage, die sich in einem Umfeld mit anderen bewegten oder ruhenden Objekten bewegen und mit Hilfe solcher Verfahren ihre eigene Bewegung relativ zu den anderen Objekten kontrollieren. Umgekehrt können solche Verfahren aber auch eingesetzt werden, um von ruhenden Objekten (wie z.B. eine Brücke über einer Autobahn oder - als Bewegungsmelder - über einer Tür) aus die Bewegung anderer Objekte zu erfassen und zu analysieren.

Ein Hauptanwendungsgebiet solcher - auch unter dem Namen "Abstandsradar" bekannter - Systeme ist der individuelle Straßenverkehr. Die Aufgabe dieser Abstandsradargeräte besteht in dieser Anwendung hauptsächlich darin, die Entfernung (den Abstand) des mit dem Radargerät ausgerüsteten Fahrzeugs von dem oder den vorausfahrenden anderen Fahrzeugen und gegebenenfalls auch deren Relativgeschwindigkeit (Differenzgeschwindigkeit) zu dem messenden Fahrzeug zu bestimmen.

Im folgenden werden die Begriffe "Entfernung" und "Abstand" synonym gebraucht, ebenso die Begriffe "Relativgeschwindigkeit" und "Differenzgeschwindigkeit".

Abstandsradare sind Radargeräte, die an der Frontseite (Bereich Stoßstange/Scheinwerfer/Kühler-Grill) des Kraftfahrzeugs (Kfz) angebracht sind und einen schmalen Sektor vor dem Kfz überdecken, so z.B. einen Winkelbereich, der je nach Anwendung zwischen zwei und zwanzig Grad breit sein kann (3 dB Punkte der Antenne) und eine Entfernung, die bis zu 150 m reichen kann. Je nach Einsatzfeld kann der genannte Gesamtwinkelbereich noch in einzelne Untersegmente (z.B. von 2° Breite) untergliedert sein.

Die Anwendungen derartiger Radare lassen sich wie folgt aufgliedern:

1) Abstandshaltung für "AICC" (Autonomous Intelligent Cruise Control), d.h. Verfolgen eines vorausfahrenden Kfz mit festem Sicherheitsabstand bei mittleren und hohen Geschwindigkeiten u.a. auf Autobahnen, Schnellstraßen o.ä. ("Kolonnenfahren"). AICC beinhaltet Eingriff in die Bremse und/oder Gas zur Regelung des Abstandes.

2) "Stop & Go", d.h. Erweiterung von "AICC" auf niedrige Geschwindigkeiten, geringere Abstände und innerstädtischen Verkehr.

3) Abstandswarnung, d.h. Hinweis, wenn der vorgegebene Sicherheitsabstand zu dem vorausfahrenden Fahrzeug unterschritten wird.

4) Hinderniswarnung, d.h. Erkennung stehender Hindernisse und Unterscheidung von fahrenden Kfz's (z.B. Unfälle, liegengebliebene Fahrzeuge, Baustellen usw.).

Die Schwierigkeit bei derartigen Abstandsradaren liegt darin, mit begrenzter Signalbandbreite B die Entfernung (Abstand) R des eigenen Fahrzeugs zu dem anderen (bewegten oder nicht bewegten) Fahrzeug oder Objekt möglichst genau zu bestimmen bzw. mit begrenzter Meßdauer die Relativgeschwindigkeit zwischen diesen beiden möglichst genau zu ermitteln. Die Begrenzung der Signalbandbreite rührt her von den Ökonomiebestrebungen bei der Vergabe von Sendefrequenzbändern durch die Fernmeldeämter. Weiterhin gehen höhere Bandbreiten einher mit meist höheren Kosten und höherem Realisierungsaufwand. Die Begrenzung der Meßdauer resultiert aus dem Wunsch der Nutzer, statistisch unabhängige Meßwerte in rascher Folge und mit geringer Verzögerung vom Radarsensor zu erhalten.

Die Entfernungsauflösung $\Delta R$ resultiert aus der Signalbandbreite gemäß

$$\Delta R = c/(2B), \qquad (1)$$

wobei B der Bandbreite eines Pulsradars bzw. dem Frequenzhub eines FMCW-(Frequenzy Modulated Continuous Wave)-Radars entspricht, und c die Lichtgeschwindigkeit angibt.

Die Geschwindigkeitsauflösung $\Delta v$ berechnet sich gemäß

$$\Delta f_d = 1 / T_o \qquad (2)$$

$$\Delta v = c \cdot \Delta f_d/(f_o \cdot 2 \cos \alpha)$$

aus der Dopplerauflösung $\Delta f_d$ bzw. der Meßdauer $T_o$, der Trägerfrequenz $f_o$ und der Lichtgeschwindigkeit c. Der Anstellwinkel $\alpha$ liegt hier bei ca. 90 Grad.

2

Typische Werte für $\Delta R$ bzw. $\Delta v$ sind

$$\Delta R = 1...5 \text{ m}$$

$$\Delta v = 1...2 \text{ km/h.}$$

Obwohl die Auflösung $\Delta R$ bzw. $\Delta v$ die Grenze für die Trennung zweier Objekte unterschiedlicher Entfernung R bzw. Relativgeschwindigkeit v angibt, sind die Werte zugleich Anhaltspunkte für die erzielbare Genauigkeit der Entfernung und Relativgeschwindigkeit. Theoretisch kann die Schätzgenauigkeit einer Meßgröße bei hohem Signal/Störabstand bzw. Signal/Clutterabstand deutlich über die Auflösungsgrenzen hinaus gesteigert werden. In der Praxis sind hierzu unterschiedliche Lösungsansätze denkbar. Hier wird ein spezielles, auf statistischen Modellen basierendes Verfahren vorgestellt, um hohe Genauigkeit der Entfernung und Relativgeschwindigkeit zu vorausfahrenden Kraftfahrzeugen zu erzielen.

Die Struktur der Sende- und Empfangssignalverarbeitung in diesem bekannten System wird im folgenden näher erläutert.

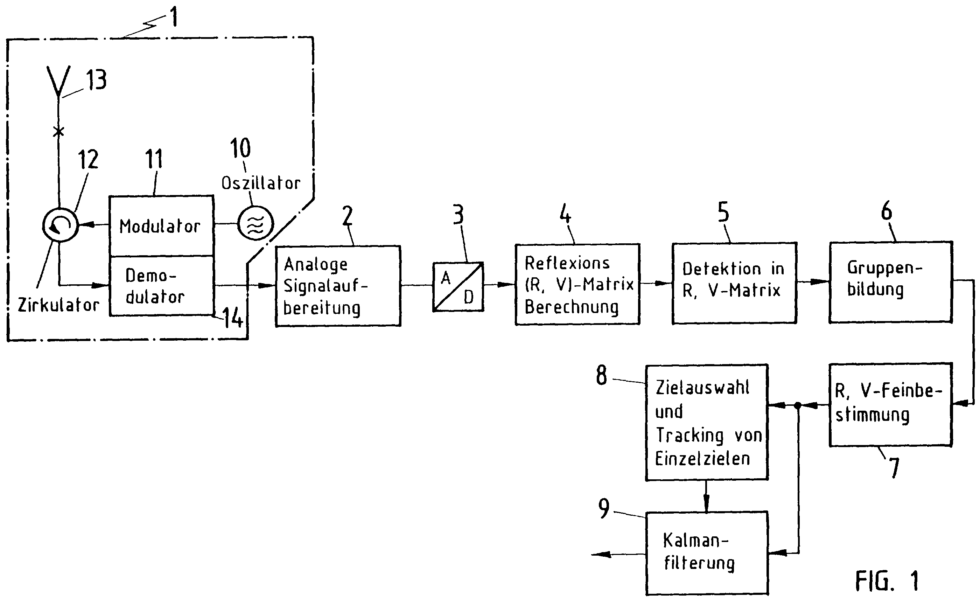

Zum besseren Verständnis sei auf die FIG. 1 hingewiesen, die weiter unten im Zusammenhang mit der Erfindung näher erläutert wird, an der sich aber auch die folgende Beschreibung des bekannten Verfahrens orientiert.

Ein herkömmliches Abstandsradar (Puls oder FMCW) besteht aus einem Radarsensor 1 und einer nachgeschalteten Auswerteeinheit 2-6 und 8.

Der Radarsensor 1 enthält einen HF-Sendeoszillator 10, der seine Signale über einen Modulator 11 und Zirkulator 12 auf eine Sende/Empfangsantenne 13 gibt, die das modulierte Sendesignal aussendet. Ein Teil des Sendesignals wird an anderen im Strahlungsweg liegenden (beweglichen oder unbeweglichen) Objekten reflektiert und von der Sende/Empfangsantenne 13 des Radarsensors 1 wieder empfangen. Das durch die relative Bewegung des Radargeräts gegenüber dem reflektierenden Objekt infolge des Dopplereffekts in seiner Frequenz "doppler-verschobene" Empfangssignals ("Dopplersignal") wird über den Zirkulator 12 und einen Demodulator 14 der Auswerteeinheit 2-6 und 8 zugeleitet.

In der Auswerteeinheit 2-6 und 8 wird das Empfangssignal nach Abmischung ins Basisband (Demodulation) und analoger Singalaufbereitung 2 (Verstärkung, Filterung etc.) in der Regel digitalisiert 3 und in einer ersten Berechnungseinheit 4 einer R,v-Analyse unterzogen, wobei die Ergebniswerte in eine Reflexionsmatrix (R-v-Matrix) der Auflösung $\Delta R$, $\Delta v$ (entspricht Gleichung (1), (2)) eingetragen werden. Man spricht dabei von Entfernungs- und Dopplertoren der Breite $\Delta R$ bzw. $\Delta v$. Die Reflexionsmatrix $\underline{A}(i\Delta R, k\Delta v)$ mit den komplexen Elementen $A(i \cdot \Delta R, k \cdot \Delta v)$ wird typischerweise mit jedem Meßintervall der Dauer $T_o$ neu gebildet. Die Art der Berechnung der Amplituden- und Phasenwerte $A(i \cdot \Delta R, k \cdot \Delta v)$ der Reflexionsmatrix hängt von dem verwendeten Modulationsverfahren ab. Für die im weiteren vorgestellten erfindungsgemäßen Verfahren ist es unerheblich, welches Modulationsverfahren zum Einsatz kommt. Es kommt nur darauf an, daß die Reflexionsmatrix $\underline{A}$ oder Teile davon (Zeilen, Spalten) vorliegen. Die Verfahren lassen sich auch auf die Betragswerte der Komponenten anwenden, das heißt, es kann aus Aufwandsgründen auf die komplexen Werte verzichtet werden und mit den Beträgen operiert werden.

Nach Berechnung der Reflexionsmatrix in der ersten Berechnungseinheit 4 erfolgt die Detektion 5 und die Zuordnung 6 der einzelnen Detektionen aus einem begrenzten und zusammenhängenden Gebiet zu einem Objekt ("Objektbildung" bzw. "Gruppenbildung"). Typischerweise führt bereits ein idealisiertes punktförmiges Ziel infolge unterschiedlicher Effekte (Fensterung, Bandbegrenzung, grobe Zuordnung in Zellen der Breite $\Delta R$, $\Delta v$) zu Detektionen in mehreren Nachbarzellen, so z.B. in drei Geschwindigkeits- und drei Entfernungszellen. Bei hohem Signal/Störabstand sind Detektionen in weiteren Nachbarzellen zu erwarten. Sie sind alle einem Objekt (=Ziel) zugeordnet.

Anschließend werden durch Anwendung von Suchfilter- oder Referenzmusteroperatoren auf die Matrixelemente der einzelnen Objekte deren Abstand bzw. deren Differenzgeschwindigkeit bestimmt. In einer Zielauswahl- und -Tracking-Einheit 8 wird anschließend nach vorgegebenen Kriterien die Auswahl relevanter Ziele vorgenommen und ein "Tracking", d.h. eine Spurbildung oder Verfolgung dieser ausgewählten Objekte als Funktion der Zeit durchgeführt. Aus den ermittelten Abstands- bzw. Differenzgeschwindigkeitswerten der als relevant erkannten Objekte können Steuersignale abgeleitet werden, die z.B. auf den Motor oder auf automatische Brems(ABS)- bzw. -Schlupfregelungs(ASR)-Systeme einwirken oder einem Abstandsregler oder Gefahrenrechner zugeleitet werden.

Die Aufgabe der Erfindung besteht darin, ein solches Verfahren zur Bestimmung des Abstands und/oder der Differenzgeschwindigkeit zu schaffen, das genauere Werte für diese beiden Meßgrößen liefert als die herkömmlichen Verfahren. Ferner soll eine möglichst wenig aufwendige Anordnung zum Durchführen des zu schaffenden Verfahrens angegeben werden.

Die erfindungsgemäße Lösung ist in bezug auf das zu schaffende Verfahren durch die Merkmale des Patentanspruchs 1 und in bezug auf die zu schaffende Anordnung durch die Merkmale des Patentanspruchs 14 wiedergegeben.

Die übrigen Ansprüche enthalten vorteilhafte Aus- und Weiterbildungen des erfindungsgemäßen Verfahrens (Ansprüche 1 bis 13) bzw. der erfindungsgemäßen Anordnung (Anspruch 15).

Ein wesentlicher Vorteil des erfindungsgemäßen Verfahrens besteht darin, daß mit relativ geringem Mehraufwand eine weitaus genauere Bestimmung der Mindestentfernung (Mindestabstand) bzw. der Relativgeschwindigkeit eines als relevant eingestuften Objekts möglich ist als mit herkömmlichen Verfahren dieser Art.

Ein wesentlicher Vorteil der erfindungsgemäßen Anordnung besteht darin, daß sie im Vergleich zu herkömmlichen Anordnungen dieser Art mit relativ geringem Mehraufwand realisiert werden kann. Es muß lediglich eine zweite Berechnungseinheit zwischen der Detektions- und Gruppenbildungseinheit und der Zielauswahl- und -Tracking-Einheit geschaltet werden, die die Feinwerte (=Korrekturwerte) für die zuvor nur grob bestimmten Abstands- bzw. Differenzgeschwindigkeitswerte berechnet und diesen zufügt.

Eine weitere Verbesserung der Werte wird in einer vorteilhaften Weiterbildung der erfindungsgemäßen Anordnung dadurch erreicht, daß der Zielauswahl- und -Tracking-Einheit bzw. der erfindungsgemäß eingefügten zweiten Berechnungseinheit ein Kalman-Filter nachgeschaltet wird.

Im folgenden wird die Erfindung anhand der Figuren näher erläutert. Es zeigen:

FIG. 1     das Blockschaltbild einer bevorzugten Ausführungsform der erfindungsgemäßen Anordnung zum Durchführen des erfindungsgemäßen Verfahrens mit einer Berechnungseinheit zur R,v-Feinbestimmung und einem Kalman-Filter;

FIG. 2     eine bevorzugte Ausführungsform des Kalman-Filters für ein Kfz-Abstandsradar gemäß FIG. 1 als Modell (FIG. 2a) sowie die zugehörige Meßvorschrift (FIG. 2b) und den zugehörigen Algorithmus (FIG. 2c).

Das Abstandsradar in FIG. 1 enthält in seiner einfachsten Form im Vergleich zu den bereits geschilderten bekannten Abstandsradaren lediglich eine zusätzliche Baugruppe, nämlich die Baugruppe 7 "R,v-Feinbestimmung", in der die Korrekturwerte für zuvor nur grob bestimmte Werte für Abstand und Differenzgeschwindigkeit ermittelt werden und diese mit den ermittelten Korrekturwerten korrigiert werden. Das mit 9 bezeichnete Kalman-Filter ist eine vorteilhafte Weiterbildung der Erfindung, die die ermittelten Abstands- und Differenzgeschwindigkeitswerte weiter verbessert (siehe unten).

Die im folgenden beschriebenen Verfahrensschritte sind in FIG. 1 dem Block 7 "R-v-Feinbestimmung" zugeordnet. Sie haben zum Ziel, die Mindestentfernung und Relativgeschwindigkeit eines entdeckten Objektes mit geringem Aufwand genauer zu bestimmen, als dies durch das (grobe) $\Delta R$-, $\Delta v$-Raster der Anordnung bis zu diesem Funktionsblock 7 hin möglich ist. Unter Mindestentfernung wird hier der Abstand zum nächstliegenden Reflexionspunkt z.B. an der rückwärtigen Stoßstange des vorausfahrenden Kfz verstanden.

Kern des Verfahrens sind folgende Lösungsansätze:

1. Nutzung zweidimensionaler Operatoren
   Ausgegangen wird von den komplexen Werten oder den Beträgen der Elemente der Reflexionsmatrix

$$\underline{\underline{A}}(i\Delta R, k\Delta v) \text{ für } i = i_o, i_o+l, i_o+2,... i_o+L;$$

$$k = k_o, k_o+l, k_o+2,... k_o+N,$$

wobei $i_o$, L, $k_o$ und N so gwählt sind, daß dort die relevanten Teile der zu einem Objekt gehörenden Detektionen liegen ("Objektgebiet"). Durch Anwendung von zweidimensionalen Suchfilter- oder Referenzmusteroperatoren $C_{mn}(i,k)$ läßt sich die genaue Entfernung und Relativgeschwindigkeit im R-v-Raum bestimmen, d.h. es werden für jeden Gitterpunkt (charakterisiert durch m,n) eines feinen R-v-Rasters die Referenzmuster bzw. Suchfilterkoeffizienten ermittelt und in einer anschließenden Filter- bzw. Vergleichsoperation die Koeffizienten $m_o,n_o$ gesucht, welche beste Übereinstimmung von Referenz- und aktuellen Meßdaten liefern. Dieser aus der optischen Bildverarbeitung bekannte Ansatz läßt sich in vorteilhafter Weise wie folgt vereinfachen:

2. Zerlegung mit getrennter Entfernungs- und Geschwindigkeitsanalyse

   a) Es wird für die Feinbestimmung der Mindestentfernung die Dopplerzelle mit maximaler Amplitude gewählt (Index $k_n$). Die Amplitudenwerte

$$A_O = |A(i_O \Delta R; k_n \Delta v)|$$
$$A_1 = |A((i_O+1)\Delta R, k_n \Delta v)| \qquad (3)$$
$$\vdots \qquad\qquad \vdots$$
$$A_L = |A((i_O+L)\Delta R; k_n \Delta v)|$$

werden einem Vektor $\underline{F} = (A_o, A_1, A_2 ..., A_L)^T$ zugeordnet, welcher als Merkmalsvektor für einen Vektorenvergleich oder für eine Klassifikation dient, wobei "T" für transponiert steht.

Zur Bestimmung von $k_n$ können alternativ hierzu auch die Amplitudenwerte bei verschiedenen Entfernungen herangezogen werden. Dies erfolgt in einfacher Weise für jeden relevanten Dopplerwert in der Umgebung des Maximums durch Amplituden- oder Energiemittelung über der Entfernung.

b) Ein Vektorvergleich mit M à priori statistisch ermittelten Referenzvektoren

$$\underline{C}_1 = (C_{10}, C_{11}, C_{12}, \cdots C_{1L}.)^T$$
$$\vdots \qquad\qquad \vdots$$
$$\vdots \qquad\qquad \vdots \qquad\qquad\qquad (4)$$
$$\vdots \qquad\qquad \vdots$$
$$\underline{C}_M = (C_{MO}, C_{M1}, C_{M2}, \cdots C_{ML})^T$$

wird durchgeführt (T steht für transponiert). Hierbei entspricht der Vektor $\underline{C}_m$ (m = 1,2, ... M) der erwarteten Amplitudenverteilung in den L+1 aufeinanderfolgenden Entfernungstoren, wenn der Entfernungsfeinwert durch

$$R_m = (i_o + p \cdot m/M)\Delta R - R_g \qquad (5)$$

im Intervall $(i_o \Delta R, (i_o + p)\Delta R)$ gegeben ist. Zwei benachbarte Referenzvektoren unterscheiden sich in dem zugehörigen Entfernungsfeinwert um die verbesserte "Auflösung"

$$\Delta R^* = (p/M)\Delta R << \Delta R \text{ mit } p << M \qquad (6)$$

Die Größe $R_g$ stellt einen Offset dar, der z.B. statistisch ermittelt werden kann.

Der Vektorvergleich zwischen dem Merkmalsvektor $\underline{F}$ und dem Referenzvektor $\underline{C}$ gibt an, welchem Zwischenwert und damit welcher genauen Entfernung der Merkmalsvektor $\underline{F}$ entspricht. Der Vektorvergleich kann nach unterschiedlichen Verfahren durchgeführt werden, beispielsweise

* durch Korrelation der Merkmalsvektors $\underline{F}$ mit den Referenzvektoren $\underline{C}_m$ für m = 1,2, ... M und Auswahl des Betragsmaximums (liefert Index m);

* oder mittels eines Klassifikationsverfahrens, z.B. der abstandsmessenden Klassifikation, bei der das Minimum des gewichteten Abstandes

$$D_m = |\underline{W}_m^T \cdot (\underline{C}_m - \underline{F}/F_o)|^q \qquad (7)$$

gesucht wird, wobei der Vektor $\underline{F}$ durch Division mit $F_o$ normiert wird und der Gewichtsvektor $\underline{W}_m$ eine geeignete Abschwächung der Beiträge der entfernten Entfernungstore erlaubt (T steht dabei für transponiert; q = Fehlernorm; z.B. resultiert für q = 2 eine quadratische Norm)

c) Die Feinberechnung der Relativgeschwindigkeit v erfolgt mittels der Reflexionswerte A (i$\Delta$R, $k_o\Delta$v) ... A (i$\Delta$R, ($k_o$+N)$\Delta$v), vorzugsweise der drei Werte

$$|A (i\Delta R, (k_n-1)\Delta v)| = a_1 \qquad (8)$$

$$|A (i\Delta R, k_n\Delta v)| = a_2$$

$$|A (i\Delta R, (k_n+1)\Delta v)| = a_3$$

wobei in vorteilhafter Weise die Schwerpunktbildung zum Zuge kommt:

$$k_n\Delta v + \Delta v \cdot (a_3 - a_1)/(a_1 + a_2 + a_3) = v \qquad (9)$$

Der Index i kann dabei entweder identisch $i_o$ oder gemäß Gleichung (5) als gerundeter Wert von ($i_o$ + p $\cdot$ m/M ) oder aber als der Index des im Objektbereich größten Amplitudenwertes festgelegt werden.

## 3. Vorteilhafte Parameterauslegung

Eine Vereinfachung der oben angeführten Entfernungsbestimmung hat sich als günstig erwiesen. Es werden hierbei von Gleichung (3) nur die beiden Stützstellen $A_o$ und $A_l$ genutzt.

Aus L=1 resultiert der Merkmalsvaktor $\underline{F}$ = ($A_o$, $A_l$)$^T$ und der Referenzvektor $\underline{C}_m$ = ($C_{mo}$, $C_{ml}$)$^T$ mit m = 1,2 ... M (T steht für transponiert). Weiterhin erweist sich p=1 als vorteilhaft. Außerdem wird $i_o$ sinnvollerweise als kleinster Wert innerhalb des Objektgebietes gewählt.

## 4. Einschränkung des Analysebereichs

Eine weitere Vereinfachung z.B. für die Abstandsregelung bei Stop & Go-Betrieb resultiert aus der Beschränkung des skizzierten Verfahrens auf den Nahbereich, wo die absoluten Toleranzen für den Sicherheitsabstand erheblich geringer sind als in großen Entfernungen und somit höhere Genauigkeitsanforderungen an die Entfernungs- und Geschwindigkeitsmessung gestellt werden.

## 5. Meßbereichs- und Typspezifische Referenzbektoren

Die Referenzvektoren $\underline{C}_m$ werden hier als entfernungsunabhängig betrachtet, d.h. sie sind identisch für nahe, mittlere und weite Entfernungen. Ohne großen Mehraufwand läßt sich in einer Weiterbildung der Erfindung mit Referenzvektoren operieren, die nur für gewisse Entfernungsbereiche gelten, um z.B. den unterschiedlichen Radar-Beleuchtungen des vorausfahrenden Kfz im Nah- und Fernbereich gerecht zu werden. Sinnwoll erweitern läßt sich der dargestellte Ansatz auch durch Nutzung verschiedener Referenzvektoren, die den Typus des vorausfahrenden Objekts charakterisieren (Lkw, Pkw, Motorrad usw.) und somit automatisch erkennen lassen (relevant z.B. für Hinderniswarnung).

## 6. Kalman-Filter zur weiterer Genauigkeitssteigerung

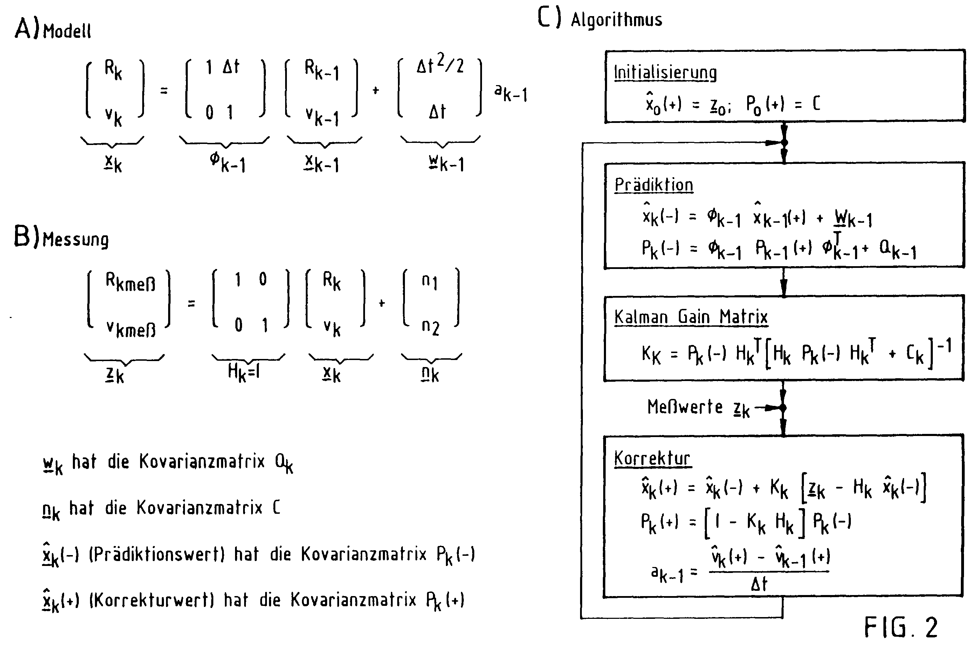

Gemäß FIG. 1 wird ein optimales Kalman-Filter 9 zur Steigerung der Entfernungs- und Geschwindigkeitsmeßgenauigkeit eingesetzt. Das Filter 9 sitzt parallel zum Tracker 8, d.h. für eine kleine Anzahl von Einzelspuren wird mit den Ausgangswerten der R-v-Feinbestimmung jeweils ein Kalman-Filter beschickt. Durch diese Anordnung beeinträchtigt die vom Tracker verursachte Verzögerung und Glättung des Kalman-Filters 9 nicht. Ein vorteilhafter Aufbau des Kalman-Filters 9 geht aus FIG. 2 hervor. Dort ist in FIG. 2a das dem Filter zugrunde liegende Modell gezeigt sowie in FIG. 2b die zugehörige Meßvorschrift. FIG. 2c zeigt den dem Filter zugrunde liegenden Algorithmus.

Das Kalman-Filter basiert auf dem physikalischen Bewegungsmodell

$$R_k = R_{k-1} + v_{k-1} \cdot \Delta t + (a_{k-1}(\Delta t)^2)/2 \qquad (10)$$

$$v_k = v_{k-1} + a_{k-1} \Delta t \qquad (11),$$

das heißt, zum Meßzeitpunkt k $\cdot \Delta$t berechnet sich die Entfernung $R_k$ aus der Entfernung zum Meßzeitpunkt (k-1)$\Delta$t durch Berücksichtigung der ersten Ableitung (das heißt der Geschwindigkeit $v_{k-1}$) und der zweiten Ableitung (das heißt der Beschleunigung $a_{k-1}$). Das Zeitinkrement $\Delta$t entspricht dem Abtastintervall (= dem Inversen der Abtastfrequenz) des Kalman-Filters und deckt sich meist mit der Meßdauer $T_o$ (Gleichung 2).

Weiterhin beschreibt FIG. 2, daß die gemessenen Entfernungs- und Geschwindigkeitswerte $R_{kmeß}$, $v_{kmeß}$ aus den wahren Werten durch Überlagerung von weißem Rauschen $n_1$, $n_2$ hervorgehen. Der Abschnitt c) von FIG. 2 beschreibt den als Kalman-Filter bekannten Algorithmus zur optimalen Schätzung ("Optimalfilterung") des Vektors $\underline{x}_k = (R_k, v_k)^T$ aus den Meßwerten $\underline{z}_k = (R_{kmeß}, v_{kmeß})^T$. Der optimale Schätzer lautet $\hat{\underline{x}}_k(t)$.

Die Erfindung ist natürlich nicht auf die beschriebenen Ausführungsbeispiele beschränkt, sondern vielmehr sinngemäß auch auf andere übertragbar.

So ist es z.B. auch möglich, die vereinfachte Feinbestimmung der Relativgeschwindigkeit gemäß dem weiter oben unter Punkt 2. behandelten Verfahren mit mehr als drei Stützstellen durchzuführen, die symmetrisch um die Zelle mit dem größten Amplitudenwert (Index $k_n$) gruppiert sind.

**Patentansprüche**

1. Verfahren zur Bestimmung des Abstandes und/oder der Differenzgeschwindigkeit zwischen einem Radarsensor (1) und einem oder mehreren Objekten mittels einer dem Radarsensor (1) nachgeschalteten Auswerteeinheit (2-8), bei welchem Verfahren folgende Verfahrensschritte in der Auswerteeinheit (2-8) nacheinander ausgeführt werden:

   a) das analoge und ins Basisband abgemischte Empfangssignal des Radarsensors (1) wird in einer analogen Signalaufbereitung (2) analog vorverarbeitet und gegebenenfalls in einem Analog/Digital-Wandler (3) in ein Digitalsignal umgewandelt,

   b) das abgemischte und vorverarbeitete Empfangssignal oder gegebenenfalls das entsprechende Digitalsignal wird in einer ersten Berechnungseinheit (4) einer Abstands(R)- und/oder Differenzgeschwindigkeits(v)-Analyse unterzogen und die Ergebnisse der Analyse in einer Reflexionsmatrix abgespeichert,

   c) anhand der Reflexionsmatrix werden in einer Detektions- und Gruppenbildungseinheit (5,6) detektierte Signale aus begrenzten und zusammenhängenden Gebieten einzelnen Objekten zugeordnet, wobei aus der Reflexionsmatrix die Analyseergebnisse als komplexe Werte oder als Betragswerte in der Form

$$A(i\Delta R, k\Delta v)$$

   vorliegen und $i = i_o, i_o+1, i_o+2, ..., i_o+L$ und $k = k_o, k_o+1, k_o+2, ..., k_o+N$ und $i_o, k_o, L$ und $N$ so gewählt sind, daß dort die relevanten Signalanteile des zu einem Objekt gehörenden detektierten Signals liegen,

   d) in einer Zielauswahl- und Tracking-Einheit (8) werden nach vorgegebenen Kriterien aus den detektierten Objekten ein oder mehrere Objekte als relevante Objekte ausgewählt und dessen/deren Abstand (R) und/oder Differenzgeschwindigkeit (v) ausgegeben,

   <u>dadurch gekennzeichnet</u>, daß ein- oder zweidimensionale Filter- oder Differenzmusteroperatoren $C_{mn}(i,k)$ auf die Werte $A(i\Delta R, k\Delta v)$ angewandt werden und daß in einer der Detektions- und Gruppenbildungseinheit (5,6) nachgeschalteten zweiten Berechnungseinheit (7) zur Feinbestimmung der zuvor grob bestimmten Werte für den Abstand und/oder die Differenzgeschwindigkeit des oder der einzelnen Objekte die grob bestimmten Werte einer genaueren Analyse unterzogen werden.

2. Verfahren nach Anspruch 1, dadurch gekennzeichnet, daß zur Feinbestimmung der Differenzgeschwindigkeit und des Abstandes des oder der Objekte die Werte für den Abstand und für die Differenzgeschwindigkeit getrennt voneinander analysiert werden.

3. Verfahren nach Anspruch 2, dadurch gekennzeichnet, daß zur Feinbestimmung der Differenzgeschwindigkeit die $(2l+1)$ Reflexionswerte

$$\left| A \ (i\Delta R, \ (k_n-1)\Delta v) \right|$$

$$\left| A \ (i\Delta R, \ (k_n-(1-1))\Delta v) \right|$$

$$\cdot$$
$$\cdot$$
$$\cdot$$

$$\left| A \ (i\Delta R, k_n\Delta v) \right|$$

$$\cdot$$
$$\cdot$$
$$\cdot$$

$$\left| A \ (i\Delta R, \ (k_n+(1-1))\Delta v) \right|$$

$$\left| A \ (i\Delta R, \ (k_n+1)\Delta v) \right|$$

ausgewählt werden, wobei l gleich einer natürlichen Zahl größer oder gleich 1 vorzugsweise jedoch l=1 ist und $k_n$ gleich ist dem Index der Zelle mit dem größten Amplitudenwert.

**4.** Verfahren nach Anspruch 3, dadurch gekennzeichnet, daß der Schwerpunkt der ausgewählten (2l+1) Reflexionsmatrixwerte ermittelt und daraus der Korrekturwert abgeleitet wird, um den der zuvor bestimmte Grobwert der Differenzgeschwindigkeit zu korrigieren ist.

**5.** Verfahren nach einem der vorhergehenden Ansprüche, dadurch gekennzeichnet, daß zur Feinbestimmung des Mindestabstandes des oder der Objekte (jeweils):

- die Dopplerzelle der Reflexionsmatrix mit maximaler Amplitude (Index $k_n$) ausgewählt wird und die zugehörigen Amplitudenwerte

$$A_0 = \left| A \ (i_0\Delta R, \ k_n\Delta v) \right|$$

$$A_1 = \left| A \ ((i_0+1)\Delta R, \ k_n\Delta v) \right|$$

$$\cdot \qquad\qquad \cdot$$
$$\cdot \qquad\qquad \cdot$$
$$\cdot \qquad\qquad \cdot$$

$$A_L = \left| A \ ((i_0+L)\Delta R, \ k_n\Delta v) \right|$$

einem Vektor $\underline{F} = (A_0, A_1, \ldots A_L)^T$ zugeordnet werden, welcher als Merkmalsvektor für einen Vektorvergleich oder für eine Klassifikation dient,

- anschließend ein Vektorvergleich des Merkmalsvektors $\underline{F}$ mit M a priori statistisch ermittelten Referenzvektoren $\underline{C}_1 \ldots \underline{C}_M$ durchgeführt wird mit

$$\underline{c}_1 = (c_{10}, \ c_{11}, \ c_{12} \ \ldots \ c_{1L})^T$$
$$\underline{c}_2 = (c_{20}, \ c_{21}, \ c_{22} \ \ldots \ c_{2L})^T$$
$$\vdots \qquad\qquad\qquad \vdots$$
$$\underline{c}_M = (c_{MO}, \ c_{M1}, \ c_{M2} \ \ldots \ c_{ML})^T,$$

wobei T für transponiert steht und der Vektor $\underline{c}_m$ der erwarteten Amplitudenverteilung in den L+1 aufeinanderfolgenden Abstands- bzw. Entfernungstoren entspricht, wenn der Abstandsfeinwert im Intervall $(i_o\Delta R, (i_o+p)\Delta R)$ mit $p \in \mathbb{N}$ $p \ll M$ durch

$$R_m = (i_o + p \cdot m/M)\Delta R - R_g$$

gegeben ist, wobei $R_g$ für einen statistisch ermittelten Offset steht und sich zwei benachbarte Referenzvektoren in dem zugehörigen Abstandsfeinwert um

$$\Delta R^* = (p/M)\Delta R \ll \Delta R \text{ mit } p \ll M$$

unterscheiden,

- durch den Vektorvergleich derjenige Referenzvektor $\underline{c}_{m*}$ mit $m* \in [1,M]$ ermittelt wird, der die beste Übereinstimmung mit dem Merkmalsvektor $\underline{F}$ zeigt und aus dem der Korrekturwert für den Abstand abgeleitet wird, um den der zuvor bestimmte Grobwert des Abstandes zu korrigieren ist.

6. Verfahren nach Anspruch 5, dadurch gekennzeichnet, daß zur Bestimmung von $k_n$ Amplitudenwerte bei verschiedenen Abständen herangezogen werden, indem für jede relevante Dopplerzelle in der Umgebung der Dopplerzelle mit maximaler Amplitude eine Mittelung der Amplitude und/oder der daraus ableitbaren Energie über die Entfernung vorgenommen wird.

7. Verfahren nach einem der Ansprüche 5 oder 6, dadurch gekennzeichnet, daß der Vektorvergleich zwischen den Referenzvektoren $\underline{c}_m$ und dem Merkmalsvektor $\underline{F}$ durch Korrelation des Merkmalsvektors $\underline{F}$ mit den Referenzvektoren $\underline{c}_m$ und anschließender Ermittlung des Betragsmaximums der Korrelation erfolgt und daß anhand des ermittelten Betragsmaximums der relevante Index $m*$ bestimmt wird.

8. Verfahren nach einem der vorhergehenden Ansprüche, dadurch gekennzeichnet, daß die anschließende Ermittlung der gesuchten Indizes $m*$ aus dem Merkmalsvektor $\underline{F}$ mittels eines Klassifikationsverfahrens durchgeführt wird.

9. Verfahren nach Anspruch 8, dadurch gekennzeichnet, daß als Klassifikationsverfahren das abstandsmessende Klassifikationsverfahren angewendet wird, nach dem das Minimum des gewichteten Abstandes $D_m$ gesucht wird mit

$$D_m = |\underline{W}_m{}^T \cdot (\underline{c}_m - \underline{F}/F_o)|^q,$$

wobei T für transponiert steht und der Merkmalsvektor $\underline{F}$ durch die Division mit $F_o$ normiert wird und mit $\underline{W}_m$ ein Gewichtungsvektor bezeichnet ist, der eine geeignete Abschwächung der Beiträge der entfernten Abstands- bzw. Entfernungstore ermöglicht, sowie q eine geeignet zu wählende Fehlernorm ist mit $q \in \mathbb{R}$ $q > 0$.

10. Verfahren nach einem der Ansprüche 5 bis 9, dadurch gekennzeichnet, daß zur Feinbestimmung des Mindestabstands L = 1 gesetzt wird und dementsprechend nur die Amplitudenwerte $A_o$ und $A_1$ bzw. der Merkmalsvektor $\underline{F} = (A_o, A_1)^T$ bzw. die Referenzvektoren $\underline{c}_m = (c_{mo}, c_{m1})^T$ mit m = 1,2, ... M verwendet werden, wobei T für transponiert steht.

11. Verfahren nach Anspruch 10, dadurch gekennzeichnet, daß p = 1 gesetzt wird und/oder daß der kleinste Wert des Indexes i innerhalb eines zusammenhängenden Objektgebiets in der Reflexionsmatrix als Index $i_o$ festgesetzt wird.

12. Verfahren nach einem der vorhergehenden Ansprüche, dadurch gekennzeichnet, daß für unterschiedliche Abstands- und/oder Differenzgeschwindigkeitsbereiche und/oder für unterschiedliche Objekttypen (jeweils) unterschiedliche Sätze von Referenzvektoren $\underline{C}_m$ verwendet werden.

13. Verfahren nach einem der vorhergehenden Ansprüche, dadurch gekennzeichnet, daß die mit der zweiten Berechnungseinheit (7) korrigierten Grobwerte des Abstands und/oder der Differenzgeschwindigkeit des oder der Objekte oder die korrigierten Grobwerte des Abstands und/oder der Differenzgeschwindigkeit des oder der von der Zielauswahl- und -Tracking-Einheit (8) ausgewählten Objekte anschließend einer Kalman-Filterung unterzogen werden.

14. Anordnung zum Durchführen des Verfahrens nach einem der vorhergehenden Ansprüche, mit einem Radarsensor (1) sowie einer nachgeschalteten Auswerteeinheit (2-8), welche Auswerteeinheit (2-8) eine an den Ausgang des Radarsensors (1) angeschlossene analoge Signalaufbereitungseinheit (2) sowie gegebenenfalls einen nachgeschalteten Analog/Digital-Wandler (3) aufweist, der bzw. dem in Reihe eine erste Berechnungseinheit (4) zur Berechnung der Reflexionsmatrix, eine Detektions- und Gruppenbildungseinheit (5,6) zur Identifizierung der Objekte und zur Grob-Bestimmung von deren Abständen und/oder Differenzgeschwindigkeiten, sowie eine Zielauswahl- und -Tracking-Einheit (8) nachgeschaltet ist, dadurch gekennzeichnet, daß zwischen der Detektions- und Gruppenbildungseinheit (5,6) und der Zielauswahl- und -Tracking-Einheit (8) eine zweite Berechnungseinheit (7) zur Feinbestimmung der Abstands- und/oder Differenzgeschwindigkeitswerte geschaltet ist.

15. Anordnung nach Anspruch 14, dadurch gekennzeichnet, daß ein Kalman-Filter (9) mit seinem Eingang an den Ausgang der Zielauswahl- und -Tracking-Einheit (8) und gegebenenfalls an den Ausgang der zweiten Berechnungseinheit (7) angeschlossen ist.

FIG. 1

EP 0 784 213 A2

A) Modell

$$\begin{pmatrix} R_k \\ v_k \end{pmatrix} = \begin{pmatrix} 1 & \Delta t \\ 0 & 1 \end{pmatrix} \begin{pmatrix} R_{k-1} \\ v_{k-1} \end{pmatrix} + \begin{pmatrix} \Delta t^2/2 \\ \Delta t \end{pmatrix} a_{k-1}$$

$$\underbrace{\phantom{xx}}_{\underline{x}_k} \quad \underbrace{\phantom{xx}}_{\phi_{k-1}} \quad \underbrace{\phantom{xx}}_{\underline{x}_{k-1}} \quad \underbrace{\phantom{xx}}_{\underline{w}_{k-1}}$$

B) Messung

$$\begin{pmatrix} R_{kmeß} \\ v_{kmeß} \end{pmatrix} = \begin{pmatrix} 1 & 0 \\ 0 & 1 \end{pmatrix} \begin{pmatrix} R_k \\ v_k \end{pmatrix} + \begin{pmatrix} n_1 \\ n_2 \end{pmatrix}$$

$$\underbrace{\phantom{xx}}_{\underline{z}_k} \quad \underbrace{\phantom{xx}}_{H_k=I} \quad \underbrace{\phantom{xx}}_{\underline{x}_k} \quad \underbrace{\phantom{xx}}_{\underline{n}_k}$$

$\underline{w}_k$ hat die Kovarianzmatrix $Q_k$

$\underline{n}_k$ hat die Kovarianzmatrix $C$

$\hat{\underline{x}}_k(-)$ (Prädiktionswert) hat die Kovarianzmatrix $P_k(-)$

$\hat{\underline{x}}_k(+)$ (Korrekturwert) hat die Kovarianzmatrix $P_k(+)$

C) Algorithmus

Initialisierung

$$\hat{x}_0(+) = \underline{z}_0; \quad P_0(+) = C$$

Prädiktion

$$\hat{x}_k(-) = \phi_{k-1} \, \hat{x}_{k-1}(+) + \underline{W}_{k-1}$$
$$P_k(-) = \phi_{k-1} \, P_{k-1}(+) \, \phi_{k-1}^T + Q_{k-1}$$

Kalman Gain Matrix

$$K_K = P_k(-) \, H_k^T \left[ H_k \, P_k(-) \, H_k^T + C_k \right]^{-1}$$

Meßwerte $\underline{z}_k$

Korrektur

$$\hat{x}_k(+) = \hat{x}_k(-) + K_k \left[ \underline{z}_k - H_k \, \hat{x}_k(-) \right]$$
$$P_k(+) = \left[ I - K_k \, H_k \right] P_k(-)$$
$$a_{k-1} = \frac{\hat{v}_k(+) - \hat{v}_{k-1}(+)}{\Delta t}$$

FIG. 2